# EUROPÄISCHE PATENTSCHRIFT

(11) **EP 2 610 124 B1**
(45) Veröffentlichungstag und Bekanntmachung des Hinweises auf die Patenterteilung: **04.03.2015**
(21) Anmeldenummer: 12193322.0
(22) Anmeldetag: 20.11.2012
(51) Int. Cl.: B60T 17/00, F17C 13/00

(54) **Vorrichtung zur Schalldämpfung**
Device for sound attenuation
Dispositif pour amortissement du bruit

(30) Priorität: 19.12.2011 DE 102011089089
(43) Veröffentlichungstag der Anmeldung: 03.07.2013
(73) Patentinhaber: ThyssenKrupp Marine Systems GmbH, 24143 Kiel (DE)
(72) Erfinder: Rademann, Dipl.-Ing. Helmut, 24784 Westerrönfeld (DE)
(74) Vertreter: Patentanwälte Vollmann & Hemmer

(56) Entgegenhaltungen:
- DD-A1- 240 966
- DE-A1- 3 216 914
- DE-B- 1 048 441
- FR-A1- 2 566 092
- US-A1- 2010 276 226

## Beschreibung

Die Erfindung betrifft eine Vorrichtung zur Schalldämpfung von aus einem Druckbehälter austretendem Gas.

Beim Ausströmen von hochverdichtetem Gas aus einem Druckbehälter verursacht die dann direkt ausgangsseitig des Druckbehälters erfolgende Expansion des Gases erhebliche Geräusche. Diese sind umso intensiver, je höher der Druck in dem Druckbehälter ist. D. h. insbesondere zu Beginn einer Druckbehälterentleerung, wenn der Druckabfall in dem Druckbehälter am größten ist, können Geräusche mit einem unerwünscht hohen Schalldruckpegel entstehen.

Aus DD 240 966 A1 ist ein Schalldämpfer zur Minderung des Ausströmgeräuschs beim Entspannen von unter Druck stehendem Gas bekannt. Dieser Schalldämpfer weist einen Gaseinlass auf, der in einer in dem Schalldämpfer ausgebildeten Ausnehmung mündet. Die Ausnehmung bildet eine Eintrittskammer des Schalldämpfers. Ferner ist in ihr ein Stellkörper axial verschiebbar angeordnet. Durch den Stellkörper wird eine auf einer Feder gelagerte Regulierkappe vorgespannt. Der Stellkörper ist hohl ausgebildet und bildet einen Teil des Strömungspfads durch den Schalldämpfer. Die Regulierkappe greift in einen Gasauslass des Stellkörpers ein. Die Regulierkappe umhüllt teilweise einen Absorptionsschalldämpfer, zu dem sie relativ verschiebbar ist. An ihr sind Öffnungen ausgebildet, über die das Gas von dem Stellkörper in den Absorptionsschalldämpfer überströmen kann. Von dort gelangt das Gas über an dem Absorptionsschalldämpfer ausgebildete Öffnungen in einen weiteren Absorptionsschalldämpfer und weiter in die Außenumgebung des Schalldämpfers. Die Regulierkappe und der davon umhüllte Absorptionsschalldämpfer bilden ein Drosselventil, das in Abhängigkeit von dem Gasdruck am Gaseinlass des Schalldämpfers steuerbar ist.

Die Aufgabe der Erfindung ist es, eine Vorrichtung zur Schalldämpfung von aus einem Druckbehälter austretendem Gas zu schaffen, welche die von dem austretenden Gas ausgehende Schallemission zumindest deutlich verringert.

Gelöst wird diese Aufgabe durch eine Vorrichtung zur Schalldämpfung mit den in Anspruch 1 angegebenen Merkmalen. Vorteilhafte Weiterbildungen dieser Vorrichtung ergeben sich aus den Unteransprüchen, der nachfolgenden Beschreibung sowie der Zeichnung. Hierbei können gemäß der Erfindung die in den Unteransprüchen und der Beschreibung angegebenen Merkmale jeweils für sich aber auch in geeigneter Kombination die erfindungsgemäße Lösung nach Anspruch 1 weiter ausgestalten.

Die erfindungsgemäße Vorrichtung zur Schalldämpfung von aus einem Druckbehälter austretendem Gas, die vorzugsweise zur Anordnung direkt abströmseitig eines Auslassventils des Druckbehälters vorgesehen ist, weist ein zwischen einem Gaseinlass und einem Gasauslass eingegliedertes Drosselventil auf, das in Abhängigkeit des Drucks am Gaseinlass gesteuert ist. Der Druck am Gaseinlass der erfindungsgemäßen Vorrichtung entspricht typischerweise dem Gasdruck in dem Druckbehälter.

Zweck des Drosselventils ist es, mit diesem durch eine druckabhängig gesteuerte Änderung seines Drosselquerschnitts gezielt auf den Druckabbau in dem Druckbehälter Einfluss zu nehmen, derart, dass der Drosselquerschnitt bei einer großen Druckdifferenz zwischen dem in dem Druckbehälter herrschenden Gasdruck und dem atmosphärischen Druck bzw. dem Umgebungsdruck des Druckbehälters verringert wird, was mit einer Verringerung des Gasvolumenstroms aus dem Druckbehälter einhergeht und zur Folge hat, dass die von dem ausströmenden Gas verursachte Schallemission erheblich gesenkt wird. In umgekehrter Weise kann der Drosselquerschnitt bei geringen Druckdifferenzen zwischen dem in dem Druckbehälter herrschenden Gasdruck und dem atmosphärischen Druck, bei denen keine signifikanten Schallemissionen entstehen, zur Steigerung des Gasvolumenstroms aus dem Druckbehälter vergrößert werden.

Zweckmäßigerweise ist anzustreben, dass die Baugröße der erfindungsgemäßen Vorrichtung möglichst gering gehalten wird und in etwa der Baugröße der üblichen abströmseitig eines Druckbehälters angeordneten Armaturen entspricht. Dies wird unter anderem durch eine kompakte, schlanke Ausgestaltung des Drosselventils erreicht. In diesem Zusammenhang ist vorgesehen, dass das Drosselventil einen hohlzylindrischen Ventilkörper mit mehreren an dessen Mantelfläche axial nebeneinander angeordneten Ausströmöffnungen und einen auf dem Ventilkörper axial verschiebbar gelagerten Schließkörper aufweist. Vorteilhaft kann ein Gaseinlass des Drosselventils auch den Gaseinlass der erfindungsgemäßen Vorrichtung bilden.

Der Ventilkörper des Drosselventils wird vorzugsweise von einem Zylinder gebildet, an dem eine in Achsrichtung des Zylinders verlaufende Bohrung ausgebildet ist. Bei der Bohrung handelt es sich bevorzugt um eine Sackbohrung, die einen Einströmkanal in das Drosselventil bildet. In diese Bohrung münden mehrere von der Mantelfläche des Zylinders ausgehende radiale Bohrungen, die in Achsrichtung des Zylinders nebeneinander ausgebildet sind. Besonders vorteilhaft können an dem Zylinder in dessen Achsrichtung nebeneinander jeweils mehrere über den Umfang des Zylinders verteilt angeordnete radiale Bohrungen als Ausströmöffnungen des Drosselventils ausgebildet sein.

Der Schließkörper des Drosselventils wird von einer einseitig geschlossen hohlzylindrischen Hülse gebildet, die an einer von der Gaseinlassöffnung des Ventilkörpers abwandten Seite auf den Ventilkörper aufgesteckt ist. Der Innenquerschnitt dieser Hülse korrespondiert zweckmäßigerweise derart mit dem Außenquerschnitt des Ventilkörpers, dass die Hülse gegenüber dem Ventilkörper ein geringes radiales Übermaß aufweist und auf diese Weise auf dem Ventilkörper in dessen Achsrichtung verschoben werden kann. Die Länge der Hülse ist vorteilhafterweise so bemessen, dass die Hülse dann, wenn sie weitestmöglich in Richtung der Gaseinlassöffnung des Schließkörpers verschoben ist, eine Vielzahl der in Achsrichtung nebeneinander an dem Ventilkörper ausgebildeten Ausströmöffnungen abdeckt bzw. verschließt. In dieser Stellung weist das Drosselventil seinen geringsten Drosselquerschnitt auf. Wird die Hülse nun in Richtung von der Gaseinlassöffnung des Ventilkörpers weg verschoben, werden an dem Ventilkörper zunehmend mehr der in Achsrichtung nebeneinander ausgebildeten Ausströmöffnungen freigelegt, so dass sich der Drosselventils mit der Verschiebung des Schließkörpers zunehmend vergrößert.

Vorteilhaft ist das Drosselventil derart ausgestaltet, dass der am Gaseinlass der erfindungsgemäßen Vorrichtung herrschende Druck direkt pneumatisch auf den Schließkörper des Drosselventils einwirkt. Dies ermöglicht eine weitere bevorzugte Ausgestaltung des Drosselventils, bei der der Schließkörper des Drosselventils mit einer Kolben-ZylinderAnordnung bewegungsgekoppelt ist, wobei der Zylinder der Kolben-Zylinder-Anordnung mit dem Gaseinlass der Vorrichtung leitungsverbunden ist. Die Bewegungskopplung des Kolbens mit dem Schließkörper des Drosselventils ist hierbei zweckmäßigerweise solcher Art, dass der in dem Zylinder verschiebbar geführte Kolben durch die Beaufschlagung mit dem Druck am Gaseinlass der Vorrichtung den Schließkörper an dem Drosselventil in einer Weise in die Schließstellung drückt, bei der der Drosselquerschnitt aufgrund der an dem Ventilkörper in Achsrichtung nebeneinander angeordneten Ausströmöffnungen umso geringer ist, je größer der Druck am Gaseinlass der erfindungsgemäßen Vorrichtung ist.

Neben dieser Ausgestaltung, bei der das Drosselventil direkt pneumatisch von dem Druck am Gaseinlass gesteuert wird, ist aber auch eine solche Ausgestaltung des Drosselventils denkbar, bei der das Drosselventil mittels einer elektronischen Steuerung auf der Grundlage des an dem Gaseinlass der Vorrichtung herrschenden Drucks gesteuert wird. So kann es sich bei dem Drosselventil beispielsweise um ein elektrisch betätigbares Ventil handeln, wobei im Bereich des Gaseinlasses der erfindungsgemäßen Vorrichtung mit einer elektronischen Steuerung zur Ansteuerung des Drosselventils signalverbundene Mittel zur Erfassung des in dem Gaseinlass herrschenden Drucks angeordnet sind, so dass das Drosselventil in Abhängigkeit von dem Druck am Gaseinlass der Vorrichtung elektrisch angesteuert werden kann.

Insbesondere bei einer Ausgestaltung des Drosselventils, bei der der am Gaseinlass der Vorrichtung herrschende Druck direkt pneumatisch auf den Schließkörper des Drosselventils wirkt, ist vorteilhaft vorgesehen, dass sich der Schließkörper des Drosselventils federvorgespannt auf einer Druckfeder abstützt. Dementsprechend wirkt die von der Druckfeder ausgeübte Federkraft entgegen dem in Schließrichtung des Drosselventils wirkenden Gasdruck, so dass der Schließkörper des Drosselventils bei einer Druckabnahme am Gaseinlass, bei der die von dem Gas ausgeübte Druckkraft geringer als die Federkraft ist, von der Druckfeder in eine Stellung bewegt wird, in der sich der Drosselquerschnitt des Drosselventils vergrößert.

Die erfindungsgemäße Vorrichtung weist vorzugsweise abströmseitig des Drosselventils einen Expansionsraum auf, in dem sich das aus dem Drosselventil strömende Gas entspannen kann. D. h., in der Vorrichtung kann in Durchströmrichtung zwischen dem Drosselventil und dem Gasauslass der Vorrichtung ein Raum mit einem erweiterten Volumen vorgesehen sein. Eine besonders raumsparende Anordnung des Expansionsraums ist dann möglich, wenn, wie es weiter vorteilhaft vorgesehen ist, die Ausströmöffnungen des Drosselventils in einem Gehäuse münden, welches das Drosselventil mit Abstand umgibt. Dementsprechend ist der Expansionsraum bevorzugt ringförmig um das Drosselventil herum zwischen dem Drosselventil und der Innenwandung des Gehäuses angeordnet.

Obwohl die beim Ausströmen aus einem Druckbehälter auftretenden Schallemissionen der erfindungsgemäßen Vorrichtung bereits durch die Verwendung des Drosselventils in erheblichem Maße verringert werden, kann die erfindungsgemäße Vorrichtung vorteilhafterweise zumindest einen Absorptionschalldämpfer aufweisen, der vorzugsweise abströmseitig des Drosselventils angeordnet ist. Durch diese Maßnahme wird erreicht, dass die zu dämpfenden Schallemissionen ausgangsseitig der erfindungsgemäßen Vorrichtung weiter verringert werden.

Der bzw. die Absorptionsschalldämpfer können den Gasauslass der erfindungsgemäßen Vorrichtung bilden, d. h. von dem bzw. den Absorptionsschalldämpfern kann das aus dem Druckbehälter austretende Gas in die Außenumgebung der Vorrichtung ausströmen. Vorteilhaft kann der zumindest eine Absorptionsschalldämpfer aber zusätzlich von einer gasdurchlässigen, schalldämmenden Haube umgeben sein, durch die das Gas in die Umgebung der Vorrichtung ausströmt, wobei die von dem aus dem Druckbehälter austretenden Gas hervorgerufene Schallemission nochmals verringert wird, so dass diese günstigstenfalls gar nicht mehr wahrnehmbar ist. Zusätzlich bildet die Haube einen mechanischen Schutz für den bzw. die von ihr abgedeckten Absorptionsschalldämpfer.

Um die erfindungsgemäße Vorrichtung z. B. bei einem Defekt des Drosselventils vor einer Beschädigung durch einen Gasüberdruck innerhalb der Vorrichtung zu schützen, ist gemäß einer weiteren vorteilhaften Weiterbildung der Vorrichtung vorgesehen, dass abströmseitig des Drosselventils ein Überdruckventil angeordnet ist. Dieses Überdruckventil ist zweckmäßigerweise an dem das Drosselventil außenseitig mit Abstand umgebenden Gehäuse ausgebildet.

Die erfindungsgemäße Vorrichtung ist besonders zum Einsatz in einem militärischen Unterseeboot geeignet. Bei militärischen Unterseebooten ist es häufig erforderlich, Behälter, in denen Druckluft bei vergleichsweise hohem Druck von etwa 150 bis 200 bar gespeichert ist, in vergleichsweise kurzer Zeit zu entlüften. Um die Anwesenheit des Unterseeboots nicht zu verraten, ist es erforderlich, dass eine solche Entlüftung möglichst geräuscharm durchgeführt wird. Dies ist bei Einsatz der erfindungsgemäßen Vorrichtung zur Schalldämmung von aus einem Druckbehälter austretenden Gas möglich. Insofern betrifft die Erfindung auch ein Unterseeboot mit mindestens einem Druckbehälter, an dessen Auslass eine Vorrichtung zur Schalldämpfung wie oben beschrieben angeordnet ist.

Nachfolgend ist die Erfindung anhand eines in der Zeichnung dargestellten Ausführungsbeispiels näher erläutert. In der Zeichnung zeigt:
- Fig. 1: in einer perspektivischen Ansicht eine Vorrichtung zur Schalldämpfung von aus einem Druckbehälter austretendem Gas,
- Fig. 2: verkleinert, die Vorrichtung nach Fig. 1 ohne eine in Fig. 1 dargestellte Haube,
- Fig. 3: die Vorrichtung nach Fig. 2 in einer Frontansicht,
- Fig. 4: die Vorrichtung nach Fig. 3 in einem Längsschnitt und
- Fig. 5: eine Gegenüberstellung der Druckverläufe am Auslass eines Druckbehälters bei Verwendung der Vorrichtung nach den Figuren 1 bis 4 und ohne Verwendung dieser Vorrichtung.

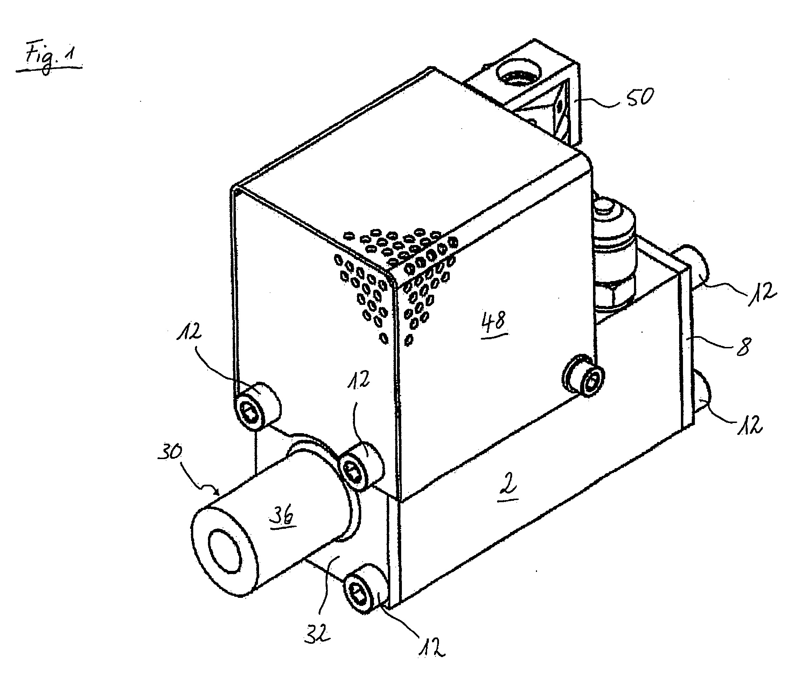

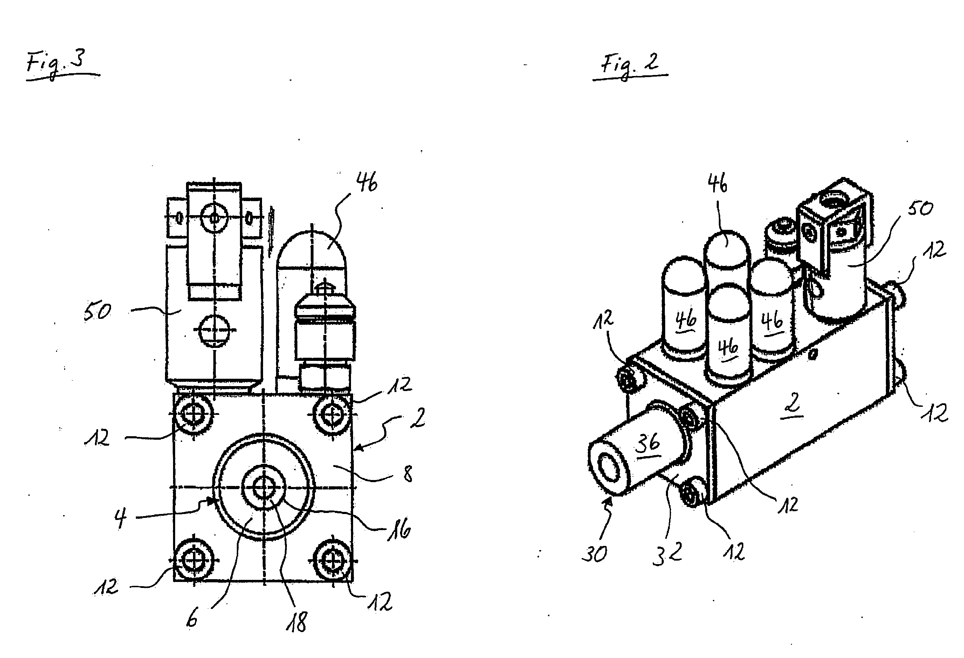

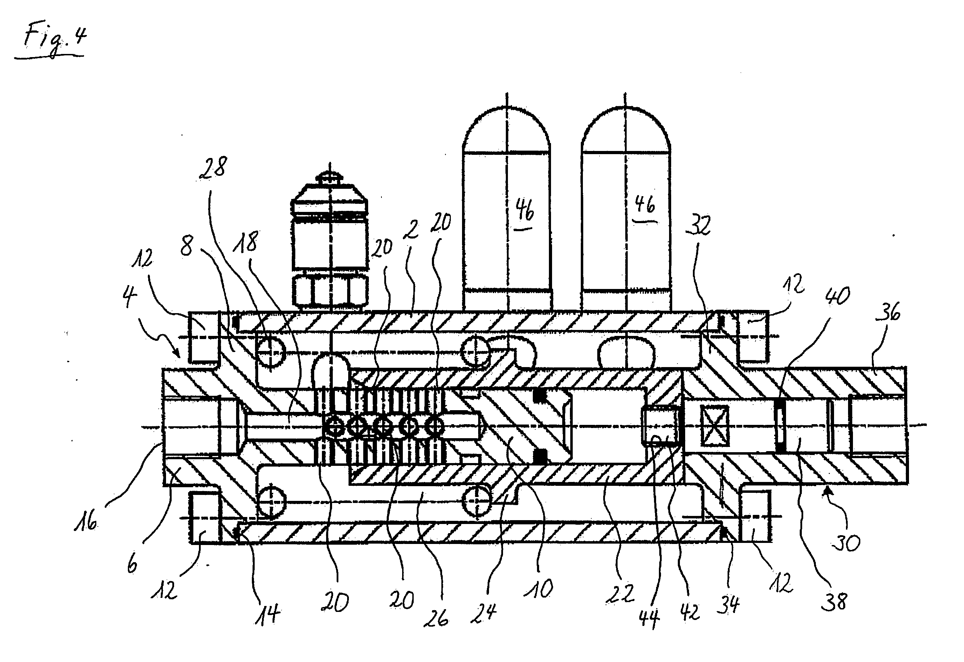

Die in den Figuren 1 bis 4 dargestellte Vorrichtung zur Schalldämpfung von aus einem Druckbehälter austretendem Gas, weist ein an seinen Stirnseiten offenes rechteckiges Gehäuse 2 auf. An einer der offenen Stirnseiten des Gehäuses 2 ist ein Drosselventil 4 in das Gehäuse 2 eingeführt.

Ein Ventilkörper des Drosselventils 4 weist in Richtung einer Mittelachse des Drosselventils 4 aufeinander folgend einen Gaseinlass 6, eine Anlageschulter 8 und einen Zylinderabschnitt 10 auf. Der Gaseinlass 6 ist zylindrisch ausgebildet. Die Anlageschulter 8 weist einen an den Gaseinlass 6 angrenzenden rechteckigen Abschnitt auf, dessen Außenquerschnitt mit dem Außenquerschnitt des Gehäuses 2 korrespondiert. Ein von dem Gaseinlass 6 abgewandte Abschnitt der Anlageschulter 8 ist ebenfalls rechteckig ausgebildet, wobei der Außenquerschnitt die Anlageschulter 8 an diesem Abschnitt mit dem Innenquerschnitt des Gehäuses 2 korrespondiert. Letztgenannter Abschnitt der Anlageschulter 8 greift zusammen mit dem sich daran anschließenden Zylinderabschnitt 10 in das Gehäuse 2 ein, während der dem Gaseinlass 6 zugewandte Abschnitt der Anlageschulter 8 an der offenen Stirnseite des Gehäuses 2 anliegt und somit wie auch der Gaseinlass 6 außerhalb des Gehäuses 2 angeordnet ist. Über die Anlageschulter 8 ist das Drosselventil 4 mit dem Gehäuse 2 über Schrauben 12 verbunden. Zur gasdichten Abdichtung des Drosselventils 4 gegenüber dem Gehäuse 2 ist an einem an der Stirnseite des Gehäuses 2 anliegenden Bereich der Anlageschulter 8 eine in eine Nut eingreifende Dichtung 14 angeordnet.

Ausgehend von einer an dem Gaseinlass 6 ausgebildeten Einlassöffnung 16 erstreckt sich ein Strömungskanal 18 durch den Ventilkörper des Drosselventils 4. Dieser Strömungskanal 18 verjüngt sich im Bereich der Anlageschulter 8.

An dem Zylinderabschnitt 10 sind in Richtung der Mittelachse des Drosselventils 4 an fünf nebeneinander angeordneten Positionen jeweils vier über den Umfang des Zylinderabschnitts 10 gleichmäßig verteilt angeordnete Radialbohrungen ausgebildet, die sich von der äußeren Mantelfläche des Zylinderabschnitts 10 bis zu dem Strömungskanal 18 erstrecken und in den Strömungskanal 18 münden. Diese Radialbohrungen bilden Ausströmöffnungen 20 des Ventilkörpers des Drosselventils 4. Ein Schließkörper 22 des Drosselventils 4 wird von einem einseitig verschlossenen Hohlzylinder gebildet, der an dem von dem Gaseinlass 6 abgewandten Ende des Ventilkörpers auf dem Zylinderabschnitt 10 aufgesetzt ist. Der Innenquerschnitt des Schließkörpers 22 weist gegenüber dem Außenquerschnitt des Zylinderabschnitts 10 des Ventilkörpers ein geringes radiales Übermaß auf, so dass der Schließkörper 22 auf dem Zylinderabschnitt 10 in Richtung der Mittelachse des Drosselventils 4 verschiebbar ist.

An der Außenseite des Schließkörpers 22 ist eine Ringschulter 24 ausgebildet. An dieser Ringschulter 24 stützt sich eine in einem Ringspalt 26 zwischen dem Drosselventil 4 und der Innenwandung des Gehäuses 2 angeordnete Schraubenfeder ab, die eine Druckfeder 28 bildet. Das von der Ringschulter 24 abgewandte Ende der Druckfeder 28 liegt an dem in das Gehäuse 2 eingreifenden Abschnitt der Anlageschulter 8 des Ventilkörpers des Drosselventils 4 an.

An der zweiten offenen Stirnseite des Gehäuses 2 ist ein beidseitig offener Hohlzylinder angeordnet. Ähnlich wie der Ventilkörper des Drosselventils 4 weist dieser Hohlzylinder 30 von seinen beiden Enden beabstandet eine Anlageschulter 32 auf. Diese ist an der äußeren Mantelfläche des Hohlzylinders ausgebildet und weist in Richtung einer Mittelachse des Hohlzylinders hintereinander angeordnet zwei Abschnitte mit rechteckigem Querschnitt auf, wobei der Querschnitt eines ersten Abschnitts mit dem Innenquerschnitt des Gehäuses 2 und der Querschnitt eines zweiten Abschnitts mit dem Außenquerschnitt des Gehäuses 2 korrespondiert. Der erste Abschnitt der Anlageschulter 32 greift in das Gehäuse 2 ein, während der zweite Abschnitt der Anlageschulter 32 an der Stirnseite des Gehäuses 2 anliegt. Im Bereich der Anlageschulter 32 ist der Hohlzylinder 30 mittels Schrauben 12 an dem Gehäuse 2 befestigt. Eine Dichtung 34, die in einer Nut angeordnet ist, welche an der Seite des zweiten Abschnitts der Anlageschulter 32 ausgebildet ist, die an der Stirnseite des Gehäuses 2 anliegt, dichtet den Hohlzylinder 30 gegenüber dem Gehäuse 2 gasdicht ab.

Ein außerhalb des Gehäuses 2 angeordneter Abschnitt 36 des Hohlzylinders 30 bildet einen zweiten Gaseinlass der dargestellten Vorrichtung zur Schalldämpfung. Über diesen Gaseinlass ist ein in dem Innenlumen des Hohlzylinders 30 mit geringem Spiel geführter Kolben 38 in Achsrichtung des Hohlzylinders 30 durch Druckbeaufschlagung verschiebbar. Der Kolben 38 weist an seinem Außenumfang eine Ringnut auf, die zur Aufnahme eines Dichtrings 40 dient, welcher dem Kolben 38 gegenüber dem Hohlzylinder 30 gasdicht abdichtet.

Der Kolben 38 ist mit dem Schließkörper 22 des Drosselventils 4 bewegungsgekoppelt. Hierzu weist der Kolben 38 an seinem dem Drosselventil 4 zugewandten Ende einen zylindrischen Vorsprung 42 mit einem daran angebildeten Außengewinde auf. Dieser Vorsprung 42 ist in eine an der geschossenen Stirnseite des Schließkörpers 22 ausgebildete Gewindebohrung 44 geschraubt.

An der Außenseite des Gehäuses 2 sind paarweise nebeneinander vier Absorptionsschalldämpfer 46 angeordnet. Diese Absorptionsschalldämpfer 46 sind mit dem Ringspalt 26 zwischen dem Drosselventil 4 und dem Gehäuse 2 strömungsverbunden. Die Absorptionsschalldämpfer 46 sind von einer gasdurchlässigen, schalldämmenden Haube 48 umgeben, die mittels Schrauben 12 an dem Gehäuse 2 befestigt ist. Darüber hinaus ist an der Außenseite des Gehäuses 2 ein Überdruckventil 50 angeordnet, das ebenfalls mit dem Ringspalt 26 strömungsverbunden ist.

Nachfolgend wird der Einsatz der Vorrichtung zur Schalldämpfung am Beispiel eines zu entleerenden Druckbehälters erläutert, in dem Luft bei einem Druck von 150 bar gespeichert ist.

Der Gaseinlass der Vorrichtung, d.h. der Gaseinlass 6 des Drosselventils 4 wird an einen in der Zeichnung nicht dargestellten Gasauslass des Druckbehälters angeschlossen. Über eine in der Zeichnung ebenfalls nicht dargestellte Leitungsverbindung zwischen dem Gaseinlass der Vorrichtung und dem Abschnitt 36 des Hohlzylinders 30 ist der Hohlzylinder 30 ebenfalls an dem Gasauslass des Druckbehälters angeschlossen.

Wird ein an dem Gasauslass des Druckbehälters angeordnetes Ablassventil geöffnet, strömt Luft von dem Druckbehälter in den Ventilkörper des Drosselventils 4. Gleichzeitig wird der in dem Hohlzylinder 30 verschiebbar gelagerte Kolben 38 von der in den Abschnitt 36 des Hohlzylinders 30 einströmenden Luft mit Druck beaufschlagt, wodurch der Kolben 38 den damit verbundenen Schließkörper 22 des Drosselventils 4 entgegen der Federkraft der Druckfeder 28 in eine Stellung drückt, in der der Schließkörper 22 nahezu alle Ausströmöffnungen 20 des Ventilkörpers des Drosselventils 4 verschließt. Dementsprechend kann nur eine geringe Luftmenge von dem Gaseinlass 6 des Drosselventils 4 bzw. von dem Gasauslass des Druckbehälters in den zwischen dem Drosselventil 4 und dem Gehäuse 2 ausgebildeten Ringraum 26 strömen, in dem sich die Luft auf einen Druck entspannt, der deutlich geringer als der in dem Druckbehälter herrschende Druck ist. Von dem Ringraum 26 strömt die darin befindliche Luft durch die Absorptionsschalldämpfer 46 und die Wandung der Haube 48 in die Außenumgebung der Vorrichtung zur Schalldämpfung, wobei aufgrund der Druckentspannung in dem Ringraum 26 und die nachfolgende Schallabsorption in den Absorptionsschalldämpfern 46 nahezu keine Schallemission entsteht.

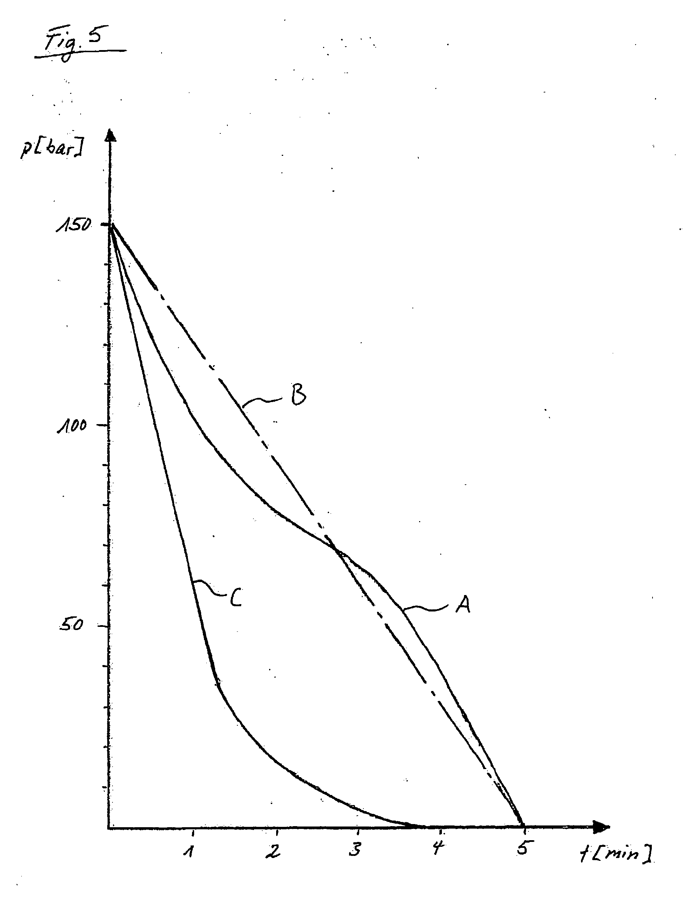

Durch das Ausströmen der Luft aus der Vorrichtung zur Schalldämpfung nimmt der Druck in dem Druckbehälter typischerweise ab, was zur Folge hat, dass auch der auf den Kolben 38 wirkende Druck entsprechend geringer wird. Somit ändert sich an dem Schieber 22 das Kräfteverhältnis zwischen der von der in dem Hohlzylinder 30 befindlichen Luft ausgeübten Druckkraft und der von der Druckfeder 28 ausgeübten Federkraft derart, dass der Schieber 22 zunehmend entgegen seiner Schließrichtung in Richtung von dem Gaseinlass 6 des Ventilkörpers des Drosselventils 4 weg bewegt wird, wodurch zunehmend mehr Ausströmöffnungen 20 des Ventilkörpers freigegeben werden, was wiederum einen im Wesentlichen konstanter Druckabbau in dem Druckbehälter zur Folge hat. Dieser ist Fig. 5 zu entnehmen, in der ein Druckverlauf A, die reale Druckabnahme wiedergibt und der Druckverlauf B eine idealisierte Druckabnahme darstellt.

Im Vergleich hierzu gibt der Druckverlauf C in Fig. 5 die Druckabnahme in dem Druckbehälter wieder, wenn die Vorrichtung zur Schalldämpfung nicht verwendet wird. Dem Druckverlauf C ist zu entnehmen, dass in den ersten etwa anderthalb Minuten der Druckbehälterentleerung eine erhebliche Druckabnahme stattfindet, die sich anschließend zunehmend verlangsamt. Nach fünf Minuten ist der Druckbehälter entleert. Insbesondere in den ersten anderthalb Minuten führt der rapide Druckabfall zu einer erheblichen Schallemission.

Bei Einsatz der Vorrichtung zur Schalldämpfung erfolgt die Entleerung des Druckbehälters auch innerhalb von fünf Minuten. Ein Vergleich der Druckverläufe A und C in Fig. 5 zeigt aber, dass die Druckabnahme bei Einsatz der Vorrichtung zur Schalldämpfung in der Anfangsphase der Entleerung des Druckbehälters deutlich langsamer als ohne diese Vorrichtung erfolgt. Dementsprechend ist in der Anfangsphase der Entleerung des Druckkörpers die von der ausströmenden Luft ausgehende Schallemission bei Einsatz der Vorrichtung deutlich geringer.

### Bezugszeichenliste

- 2: Gehäuse
- 4: Drosselventil
- 6: Gaseinlass
- 8: Anlageschulter
- 10: Zylinderabschnitt
- 12: Schraube
- 14: Dichtung
- 16: Einlassöffnung
- 18: Strömungskanal
- 20: Ausströmöffnung
- 22: Schließkörper
- 24: Ringschulter
- 26: Ringspalt
- 28: Druckfeder
- 30: Hohlzylinder
- 32: Anlageschulter
- 34: Dichtung
- 36: Abschnitt
- 38: Kolben
- 40: Dichtring
- 42: Vorsprung
- 44: Gewindebohrung
- 46: Absorptionsschalldämpfer
- 48: Haube
- 50: Überdruckventil

- A: Druckverlauf
- B: Druckverlauf
- C: Druckverlauf

## Patentansprüche

1. Vorrichtung zur Schalldämpfung von aus einem Druckbehälter austretendem Gas, mit einem Gaseinlass und einem Gasauslass und mit einem dazwischen eingegliederten steuerbaren Drosselventil (4), welches in Abhängigkeit des Drucks am Gaseinlass gesteuert ist, **dadurch gekennzeichnet, dass** das Drosselventil (4) einen hohlzylindrischen Ventilkörper mit mehreren an dessen Mantelfläche axial nebeneinander angeordneten Ausströmöffnungen (20) und einen auf dem Ventilkörper axial verschiebbar gelagerten Schließkörper (22) aufweist, welcher von einer einseitig geschlossenen hohlzylindrischen Hülse gebildet wird, die an einer von einer Gaseinlassöffnung des Ventilkörpers abgewandten Seite auf den Ventilkörper aufgesteckt ist.

2. Vorrichtung nach Anspruch 1, bei der der Schließkörper (22) des Drosselventils (4) mit einem Kolben (38) einer Kolben-ZylinderAnordnung bewegungsgekoppelt ist, deren Zylinder (30) mit dem Gaseinlass leitungsverbunden ist.

3. Vorrichtung nach einem der vorangehenden Ansprüche, bei der sich der Schließkörper (22) des Drosselventils (4) in Schließrichtung des Schließkörpers (22) auf einer Druckfeder (28) abstützt.

4. Vorrichtung nach einem der vorangehenden Ansprüche, bei dem die Ausströmöffnungen (20) des Drosselventils (4) in einem Gehäuse (2) münden, welches das Drosselventil (4) mit Abstand umgibt.

5. Vorrichtung nach einem der vorangehenden Ansprüchen, bei der abströmseitig des Drosselventils (4) mindestens ein Absorptionsschalldämpfer (46) angeordnet ist.

6. Vorrichtung nach Anspruch 5, bei der der zumindest eine Absorptionsschalldämpfer (46) von einer gasdurchlässigen, schalldämmenden Haube (48) umgeben ist.

7. Vorrichtung nach einem der vorangehenden Ansprüche, bei dem abströmseitig des Drosselventils (4) ein Überdruckventil (50) angeordnet ist.

8. Unterseeboot mit mindestens einem Druckgasspeicher, an dessen Auslass eine Vorrichtung zur Schalldämpfung nach einem der Ansprüche 1 bis 8 angeordnet ist.

## Claims

1. A device for sound damping gas exiting from a pressure container, with a gas inlet and a gas outlet and with a controllable throttle valve (4) which is integrated therebetween and which is controlled in dependence on the pressure at the gas inlet, **characterised in that** the throttle valve (4) comprises a hollow-cylindrical valve body with several outflow openings (20) arranged axially next to one another on the lateral surface of the valve body, and a closure body (22) which is axially displaceably mounted on the valve body and which is formed by a hollow-cylindrical sleeve closed at one side, said sleeve being stuck onto the valve body at a side which is away from the gas inlet opening of the valve body.

2. A device according to claim 1, wherein the closure body (22) of the throttle valve (4) is coupled in movement to a piston (38) of a piston-cylinder arrangement, whose cylinder (30) is conductively connected to the gas inlet.

3. A device according to one of the preceding claims, wherein the closure body (22) of the throttle valve (4) is supported on a compression spring (28) in the closure direction of the closure body (22).

4. A device according to one of the preceding claims, wherein the outflow openings (20) of the throttle valve (4) run out in a housing (2) which surrounds the throttle valve (4) at a distance.

5. A device according to one of the preceding claims, wherein at least one absorption sound damper (46) is arranged downstream of the throttle valve (4).

6. A device according to claim 5, wherein the at least one absorption sound damper (46) is surrounded by a gas-permeable, sound-damping hood (48).

7. A device according to one of the preceding claims, wherein a pressure relief valve (50) is arranged downstream of the throttle valve (4).

8. A submarine with at least one compressed gas storage device, at whose outlet a device for sound damping according to one of the claims 1 to 8 is arranged.

## Revendications

1. Dispositif destiné à l'atténuation du bruit d'un gaz sortant d'un récipient sous pression, comprenant une admission de gaz et une sortie de gaz, et comprenant une soupape d'étranglement (4) contrôlable, intercalée entre les deux, qui est commandée en fonction de la pression régnant au niveau de l'admission de gaz, **caractérisé en ce que** la soupape d'étranglement (4) présente un corps de soupape cylindrique creux présentant plusieurs ouvertures d'écoulement (20) disposées les unes à côté des autres dans la direction axiale sur sa surface périphérique, et un corps obturateur (22) monté mobile en translation axiale sur le corps de soupape, qui est formé d'un manchon cylindrique creux fermé d'un côté qui est emmanché sur le corps de soupape au niveau d'un côté qui est éloigné d'une ouverture d'admission de gaz du corps de soupape.

2. Dispositif selon la revendication 1, dans lequel le corps obturateur (22) de la soupape d'étranglement (4) est accouplé cinématiquement à un piston (38) d'un dispositif à piston-cylindre dont le cylindre (30) est raccordé à l'admission de gaz.

3. Dispositif selon l'une des revendications précédentes, dans lequel le corps obturateur (22) de la soupape d'étranglement (4) s'appuie contre un ressort de pression (28) dans le sens de la fermeture du corps obturateur (22).

4. Dispositif selon l'une des revendications précédentes, dans lequel les ouvertures d'écoulement (20) de la soupape d'étranglement (4) débouchent dans un boîtier (2) qui entoure la soupape d'étranglement (4) selon un certain écartement.

5. Dispositif selon l'une des revendications précédentes, dans lequel au moins un atténuateur à absorption (46) est disposé en aval de la soupape d'étranglement (4).

6. Dispositif selon la revendication 5, dans lequel l'atténuateur à absorption (46), au moins au nombre de un, est entouré d'un capot atténuateur de bruit (48) perméable aux gaz.

7. Dispositif selon l'une des revendications précédentes, dans lequel une soupape de surpression (50) est montée en aval de la soupape d'étranglement (4).

8. Sous-marin équipé d'au moins un accumulateur de gaz sous pression à la sortie duquel est disposé un dispositif d'atténuation du bruit selon l'une des revendications 1 à 8.
